Europäisches Patentamt

European Patent Office

Office européen des brevets

(19)

(11) Veröffentlichungsnummer: **0 069 368**
**B1**

(12) **EUROPÄISCHE PATENTSCHRIFT**

(45) Veröffentlichungstag der Patentschrift:
16.09.87

(51) Int. Cl.⁴: **E 06 B 3/26, E 04 F 19/02**

(21) Anmeldenummer: **82105936.7**

(22) Anmeldetag: **02.07.82**

(54) Verfahren zur Herstellung von Verbundprofilen aus einem Strangpressprofil und einem Chemiewerkstoff-Körper.

(30) Priorität: **08.07.81 DE 3126812**

(43) Veröffentlichungstag der Anmeldung:
**12.01.83 Patentblatt 83/2**

(45) Bekanntmachung des Hinweises auf die Patenterteilung:
**16.09.87 Patentblatt 87/38**

(84) Benannte Vertragsstaaten:
**AT BE CH DE FR GB IT LI NL**

(56) Entgegenhaltungen:
**DE - A - 2 329 931**
**DE - A - 2 530 989**
**DE - A - 2 632 375**
**DE - A - 2 642 746**
**DE - A - 2 833 738**
**DE - A - 2 848 694**
**DE - A - 2 909 425**
**GB - A - 2 073 290**
**US - A - 3 680 903**
**US - A - 4 260 570**

(73) Patentinhaber: **Julius & August Erbslöh GmbH & Co.,
Siebeneickerstrasse 235, D-5620 Velbert 15 (Neviges)
(DE)**

(72) Erfinder: **Rödl, Heinz, Leuthenstrasse 45,
D-4000 Düsseldorf (DE)**
Erfinder: **Pühringer, Siegfried, Veilchenstrasse 5,
D-5600 Wuppertal 2 (DE)**
Erfinder: **Döring, Gerhard, Gärtnerstrasse 4,
D-5600 Wuppertal-Ronsdorf (DE)**

(74) Vertreter: **Ernicke, Hans-Dieter, Dipl.-Ing.,
Schwibbogenplatz 2b, D-8900 Augsburg (DE)**

ACTORUM AG

**Beschreibung**

Die Erfindung bezieht sich auf Verfahren zur Herstellung von Verbundprofilen entsprechend dem Oberbegriff des Hauptanspruches sowie auf Strangpressprofile zur Durchführung des Verfahrens.

Durch die DE-A-2 329 931 ist es bekannt, die Aussenseite von Metallrahmen-Profilen aus Leichtmetall zur Bildung wärmeisolierter Fenster, Türen oder dgl. mit einer plattenförmigen Isolierschicht aus Kunststoff zu versehen. Hierzu ist der Einsatz einer Negativform mit einem Heiz- und Kühlsystem erforderlich, mit der das anzuschäumende Metallrahmen-Profil zu kuppeln ist.

Dieses vorbekannte Produktionsverfahren ist sehr kostenaufwendig, weil für eine Massenproduktion viele derartige Schäumformen erforderlich sind.

Der Erfindung liegt die Aufgabe zugrunde, ein Verfahren zur Herstellung von Verbundprofilen zu entwickeln, bei dem der Einsatz kostenaufwendiger Schäumformen entfällt und mit geringem kostenmässigen Aufwand eine wesentliche Steigerung der Produktivität erzielt werden kann.

Die erfindungsgemässe Lösung der gestellten Aufgabe ist im Kennzeichen des Hauptanspruches angegeben.

Danach wird das metallische Trägerprofil, welches mit dem anzuformenden Chemiewerkstoffkörper das angestrebte Verbundprofil bildet, beim Strangpressen mit einem, einen durchlaufenden Hohlraum umschliessenden Schalungsprofil versehen, das nach dem Ausfüllen des Hohlraumes mit dem Chemiewerkstoff vom Trägerprofil leicht trennbar ist. Das Material des Schalungsrprofils kann danach wieder eingeschmolzen werden.

Die Erfindung benötigt demnach keine speziellen Formen und lässt sich deswegen auch mit einer wesentlichen Leistungssteigerung realisieren, insbesondere dann, wenn die Varianten der Ansprüche 2 und 3 angewandt werden.

Die Massnahme nach dem Anspruch 4 lässt den Einsatz giessfähiger und nicht schäumender Chemiewerkstoffe zu.

Das Ergebnis des Verfahrens nach dem Anspruch 5 ist ein Verbundprofil mit voneinander distanzierten Trägerprofilen. Damit wird einerseits der Metallanteil am Verbundprofil reduziert, andererseits eine umfangreichere Einsatzmöglichkeit erschlossen.

So können die nach der Erfindung hergestellten Verbundprofile nicht nur für wärmeisolierte Fenster, Türen oder dgl. eingesetzt, sondern auch für ganz andere Zwecke, z.B. zur Bildung von Stossleisten und dgl. verwendet werden, bei denen es darauf ankommt, mit einem Minimum an Werkzeugkosten eine Massenproduktion durchzuführen, einen festen Verbund des Chemiewerkstoffkörpers am Trägerprofil zu erreichen und die geforderte Steifigkeit sowie ein elegantes äusseres Erscheinungsbild herbeizuführen.

Mit den Merkmalen der Erfindung wird ein Weg zur Herstellung von Maschinen- und Bauteilen aufgezeigt, beispielsweise auch zur elektrischen Isolierung, der auch die Möglichkeit bietet, das Strangpressprofil zuerst zu verformen, beispielsweise an den Enden abzuwinkeln, bevor der Chemiewerkstoffkörper angeformt wird.

Gegenstand der Erfindung sind ausserdem Strangpressprofile besonderer Form zur Durchführung der erfindungsgemässen Verfahren entsprechend den Patentansprüchen 6 bis 11. Hierbei besitzen die Trägerprofile formschlüssige Verbindungsstellen für den Chemiewerkstoffkörper, vorzugsweise in Gestalt von im Querschnitt hinterschnittene Profilleisten. Diese führen zu einer wesentlich verbesserten Verankerung des Chemiewerkstoffes.

Einzelheiten der Erfindung ergeben sich aus der Zeichnung. In ihr ist die Erfindung schematisch und beispielsweise dargestellt. Es zeigen:

Fig. 1: einen Querschnitt durch ein Verbundprofil mit einem plattenförmig angeformten Chemiewerkstoffkörper,

Fig. 2: einen Querschnitt gemäss Fig. 1 in einer Ausführungsform,

Fig. 3: einen Querschnitt durch zwei voneinander distanzierte und über ein Profilteil verbundene Strangpresshohlprofile,

Fig. 4: einen Querschnitt durch eine Anordnung gemäss Fig. 3 in einer Arbeitsstellung nach dem Anformen des Chemiewerkstoffkörpers,

Fig. 5: einen Querschnitt durch eine Anordnung als Variante zu Fig. 3,

Fig. 6: einen Querschnitt durch die Anordnung gemäss Fig. 5 in einer Arbeitsstellung nach dem Einfüllen des Chemiewerkstoffes,

Fig. 7: einen Querschnitt durch eine Anordnung mit vier Strangpresshohlprofilen und diese verbindenden Profilteilen,

Fig. 8: einen stark vergrösserten Querschnitt durch eine Profilleiste (Schrumpfleiste) und

Fig. 9 bis 14: Querschnitte durch Strangpressprofile mit entfernbaren Schalungsprofilen in mehreren Varianten.

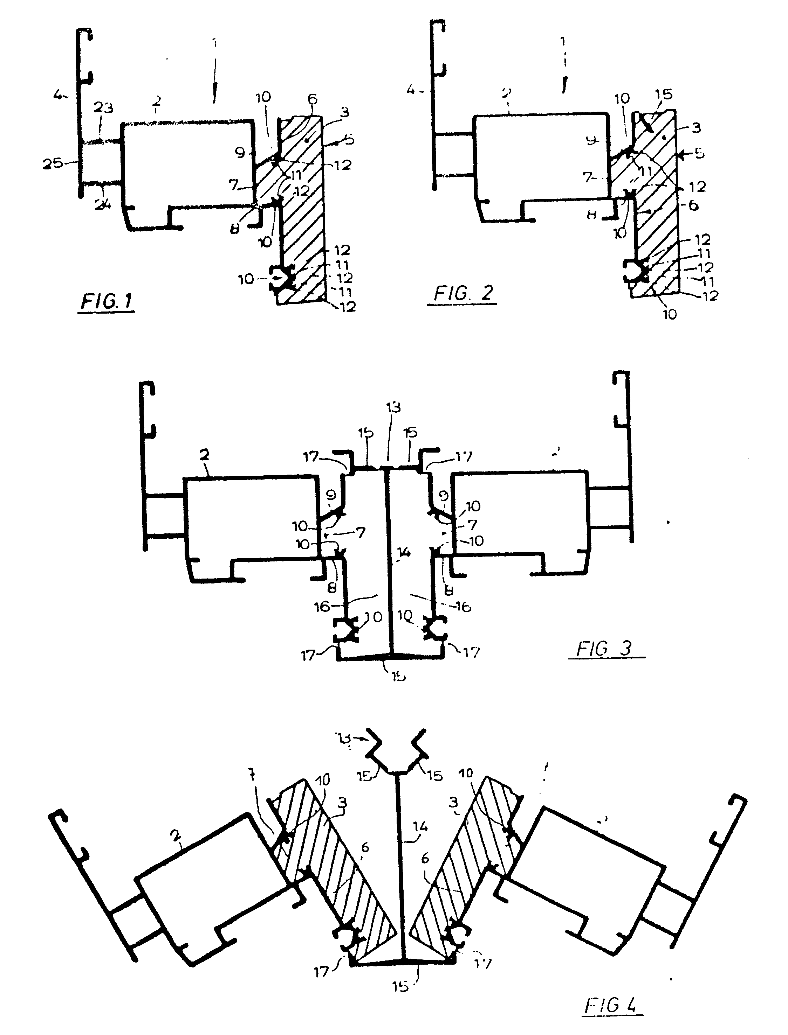

Im Ausführungsbeispiel der Fig. 1 besteht das Verbundprofil (1) aus einem Trägerprofil (2) in Gestalt eines Strangpresshohlprofiles aus Leichtmetall, insbesondere Aluminium, an dessen einer Aussenseite (6) ein plattenförmiger Körper (3) aus einem Chemiewerkstoff, z.B. Kunststoff, angeformt ist. Im Falle der Verwendung des Verbundprofils (1) für wärmegedämmte Fenster und dgl. wird die andere Aussenseite (4) des Verbundprofiles (1) vorzugsweise in ihrem metallischen Charakter belassen. Man wird in diesem Beispiel die metallische Fläche der Aussenseite eines Gebäudes und den vom Körper (3) gebildeten Bereich den Innenräumen zuordnen.

An der Aussenseite (6) des Trägerprofiles (2) befindet sich eine hinterschnittene Nut (7), die von zwei Profilleisten (10) begrenzt wird, welche sich an den Stegen (8, 9) befinden. Der in diese Nut (7) eingefülle Kunststoff des Körpers (3) wird demgemäss widerhakenartig festgehalten. Hierbei empfiehlt es sich, wenn die einzelne Profilleiste (10) eine durchlaufende Nut (11) mit durch sie distanzierten Stegen (12) aufweist, die mit Querprofilierungen (nicht dargestellt) versehen sein können.

Diese Querprofilierungen werden beispielsweise spanabhebend eingebracht oder auch beim Strangpressverfahren erzeugt. Sie dienen dazu, eine hohe Schubfestigkeit des Körpers (3) gegenüber dem Trägerprofil (2) zu erreichen.

In Distanz zu der Nut (7) ist eine weitere Profilleiste (10) vorgesehen, die erhaben gegenüber der Aussenseite (6) des Trägerprofiles (2) gestaltet und ebenfalls hinterschnitten ist. Auf diese Weise wird eine völlig formschlüssige Verankerung des Körpers (3) am Trägerprofil (2) erreicht.

An der Aussenseite (4) ist im Trägerprofil (2) eine von zwei Stegen (23, 24) gebildete Kammer (25) vorgesehen, die man wahlweise mit Isolierstoff ausfüllen oder ausschäumen kann. Die Stege (23, 24) können dann partiell abgetrennt werden, so dass in diesem Bereich eine Wärmebrücke ebenfalls unterbunden ist.

Das Ausführungsbeispiel der Fig. 2 unterscheidet sich von demjenigen der Fig. 1 dadurch, dass ein an den Steg (9) angrenzender Schenkel (15) vom Kunststoff des Körpers (3) in abgewinkelter Form umgriffen ist.

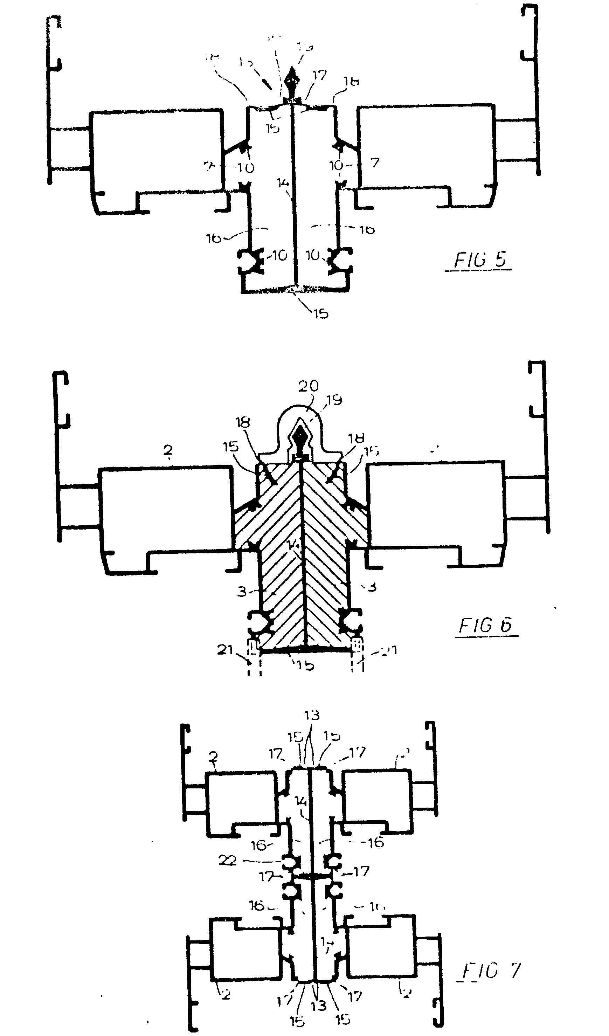

Der Gegenstand der Fig. 1 ist das Erzeugnis einer Anordnung gemäss den Fig. 3 und 4. Der Gegenstand der Fig. 2 ist ein Erzeugnis der Anordnung gemäss den Fig. 5 und 6.

Das Beispiel der Fig. 3 zeigt ein Strangpresshohlprofil bei dem zwei Trägerprofile (2) in Distanz voneinander angeordnet und durch ein Schalungsprofil (13) miteinander verbunden sind, so dass ein einstückig, herstellbares Mehrfachhohlprofil entsteht. Das Schalungsprofil (13) weist einen I-Querschnitt auf und besteht aus dem Steg (14) mit den Flanschen (15), die in Verbindung mit den Stegen (8, 9) der Trägerprofile (2) jeweils einen Hohlraum (16) bilden. Diese Hohlräume (16) gehen in die in Fig. 1 und 2 dargestellten Nuten (7) über. Sie dienen zum Ausfüllen mit einem Chemiewerkstoff, der beispielsweise ein giessfähiges Kunstharz oder ein schäumbarer Kunststoff mit wärmedämmenden Eigenschaften ist. Für andere Zwecke können andere Chemiewerkstoffe, z.B. duromere oder elastomere Kunststoffe, verwendet werden, die beispielsweise weiche oder harte Oberflächen erzeugen sollen.

Am Übergang der Flansche (15) zu den angrenzenden Stegbereichen (8, 9, 10) der Trägerprofile (2) befinden sich wandschwächende Kerben (17), deren Wandstärke so bemessen ist, dass sie beim Strangpressen Formstabilität zwischen den Trägerprofilen (2) gewährleisten, aber nach dem Ausfüllen der Hohlräume (16) mit dem Chemiewerkstoff eine Abtrennung der Flansche (15) in spanloser Bearbeitung ermöglichen.

Die Fig. 4 zeigt, wie die oberen Flansche (15) aus der Stellung gemäss Fig. 3 in diejenige gemäss Fig. 4 unter Durchtrennen der von den Kerben (17) gebildeten dünnen Stege verschwenkt werden. Wenn nun die beiden Trägerprofile (2) mit den angeformten plattenförmigen Körpern (3) in der in Fig. 4 gezeigten Art voneinander weggeschwenkt werden, dann werden auch die Wandschwächungen im Bereiche der unteren Kerben (17) durchtrennt. Es bleibt somit das Schalungsprofil (13) mit seinem Steg (14) und den angeformten Flanschen (15) übrig, das wieder eingeschmolzen wird.

Beim Ausführungsbeispiel der Fig. 5 und 6 ragt über den oberen Flansch (15) ein firstartiger Ansatz (19) in Verlängerung des Steges (14) hinaus. Diese Anordnung ist dafür bestimmt, einen flüssigen Chemiewerkstoff in die Hohlräume (16) von oben her einzufüllen. Zu diesem Zweck wird der obere Flansch (15) im Bereiche der Kerben (17) mit einem keilförmigen Werkzeug durchtrennt, was zur Folge hat, dass die einzelnen Flanschteile (15) um die Wandgelenke (18) nach unten abschwenken. Es wird damit eine Einfüllöffnung für den Chemiewerkstoff gebildet.

Wenn jedoch ein schäumbarer Kunststoff, wie Fig. 6 zeigt, eingefüllt werden soll, wird auf den firstartigen Ansatz (19) ein durchgehendes Haubenprofil (20) aufgesetzt, welches die Aufgabe hat, die von den abgewinkelten Flanschen (15) freigegebene Öffnung nach oben abzudecken, damit der Kunststoff des Körpers (3) nicht entweichen kann.

Sobald der Kunststoff erstarrt ist, wird die Haube (20) abgenommen. Es erfolgt nun eine Durchtrennung des unteren Flansches (15) mit Hilfe der Messer bzw. Fräser (21). Die Chemiewerkstoffkörper (3) mit den angeformten Trägerprofilen (2) können nunmehr vom Steg (14) des Schalungsprofiles (13) gelöst werden. Die oberen Flanschteile (15) verbleiben im Kunststoffverbund. Der untere Flansch (15) wird mit dem Steg (14) wieder eingeschmolzen.

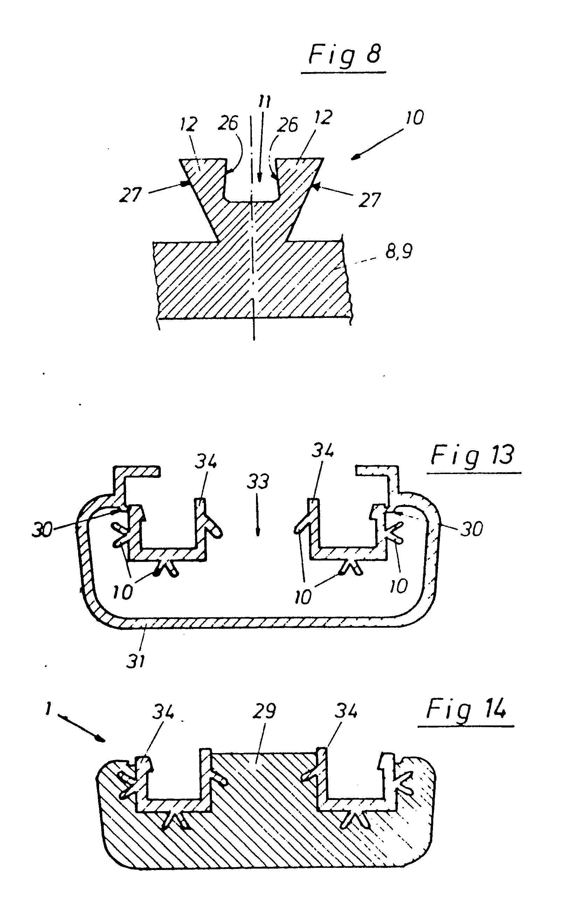

Im Ausführungsbeispiel der Fig. 7 ist schliesslich dargestellt, dass auch eine Gruppe von vier Trägerprofilen (2) in einem Zug hergestellt und mit Chemiewerkstoffkörpern (3) verbunden werden kann. In diesem Ausführungsbeispiel sind zwei Schalungsprofile (13) mit jeweils einem Steg (14) benachbart angeordnet, wobei die Stege (14) einen gemeinsamen Flansch (22) bilden. Auf diese Weise werden vier Hohlräume (16) erzeugt, in die der Chemiewerkstoff eingefüllt wird. Die aussenliegenden Flansche (15) weisen wandschwächende Kerben (17) zu den benachbarten Stegen auf. Auch im Bereiche des gemeinsamen Flansches (22) sind solche wandschwächenden Kerben (17) vorgesehen. Nach Abtrennen der Flansche (15) durch spanlose Bearbeitung ist der Verbund der vier Trägerprofile aufgehoben. Die Profile können dann gemäss Fig. 4 vom Profilteil (13) gelöst werden.

Es ist demnach möglich, mit einem einzigen Werkzeug vier Verbundprofile in einem Zug herzustellen und durch gemeinsames Ausfüllen der Hohlräume (16) mit den Isolierkörpern (13) zu versehen.

Der in starker Vergrösserung dargestellte Querschnitt durch eine Profilleiste (10) gemäss Fig. 8 lässt erkennen, dass die Nut (11) durch im spitzen Winkel zueinander stehende Innenflächen (26) der Stege (12) gebildet wird. Auch die Aussenflächen (27) der Stege (12) bilden zueinander einen spitzen Winkel, so dass der die Profilleiste (10) umgreifende Chemiewerkstoff zufolge seines Schrumpfvermögens beim Erstarren einen ausserordentlichen schubfesten Halt erfährt.

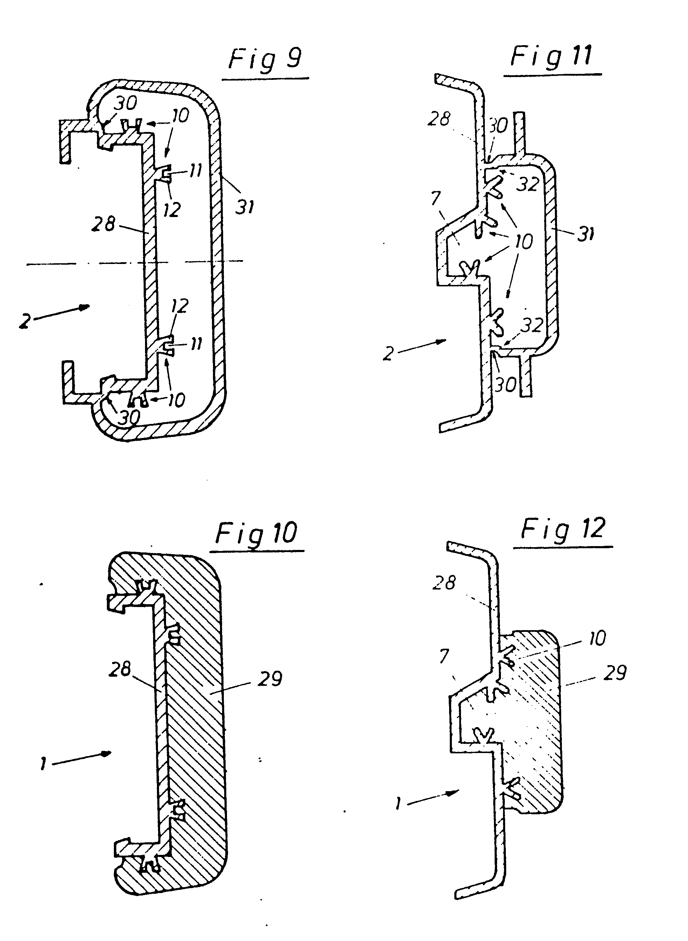

In den Beispielen der Fig. 9 bis 14 sind einige Ausführungsvarianten gezeigt, die zur Herstellung von Verbundprofilen (1) für andere Zwecke, z.B. für Stossstangen an Kraftfahrzeugen, als Stossleisten bei Laderampen oder dgl., eingesetzt werden können. Hierbei wird wiederum von einem Strangpresshohlprofil ausgegangen, das aus einem Trägerprofil und einem Schalungsprofil besteht.

Das Verbundprofil (1) besitzt ein Trägerprofil (28), das an einer Aussenseite vollkommen von einem Dämpfelement (29) umgeben ist. Das Dämpfelement (29) kann beispielsweise aus einem elastomeren Polyurethan-Schaum bestehen, der Stossenergien absorbieren kann. Die Elastizität des PU-Schaumes lässt sich variieren. Man kann aber auch andere Chemiewerkstoffe, z.B. PVC verwenden.

Als Trägerprofil (28) findet, ähnlich wie bei Fig. 1, ein stranggepresstes Leichtmetallprofil Verwendung. Es weist an der Aussenseite eine oder mehrere Profilleisten (10) auf, die auch als Schrumpfleisten bezeichnet werden können, an denen sich der Chemiewerkstoff festkrallt.

Dieses Festkrallen wird durch die Formgebung der Schrumpfleisten (10) unterstützt, indem die Schrumpfleiste (10) in zwei oder mehr Stege (12) endet, die jeweils durch eine Nut (11) voneinander getrennt werden. Die Stege (12) sind schräg nach aussen gerichtet, so dass zwischen ihnen und der Oberfläche des Trägerprofiles (28) Hinterschneidungen entstehen, die ein Ablösen des Dämpfelementes (29) vom Trägerprofil (28) verhindern. In Längsachse des Verbundprofils (1) entsteht ein kraftschlüssiger Verbund zwischen dem Dämpfelement (29) und dem Trägerprofil (28) durch Reibung des Chemiewerkstoffes an den Schrumpfleisten (10). Zur Erhöhung der Scherfestigkeit dieses Verbundes können die Stege (12) der schrumpfleisten (10) zusätzlich querprofiliert werden, wodurch ein formschlüssiger Verbund entsteht.

Fig. 10 stellt das fertige Verbundprofil (1) dar, welches durch Abtrennen oder Abfräsen des Schalungsprofiles (31) vom Trägerprofil (28) entlang von Wandschwächungen (30) entsteht.

In den Fig. 11 und 12 ist eine Alternative zu Fig. 9 dargestellt. Das Dämpfelement (3) bedeckt im Gegensatz zu Fig. 10 nur noch einen Teil der Aussenfläche des Trägerprofils (28). Dieses weist eine Nut (7) auf, in deren Bereich ebenfalls Schrumpfleisten (10) angeordnet sind, die sich insbesondere an den Rändern der Nut (7) befinden, um dadurch die Rückhaltewirkung der Hinterschneidungen zu erhöhen. Zusätzlich zu diesen zurückversetzten Schrumpfleisten (10) weist das Trägerprofil (28) noch analog zu Fig. 9 erhabene Schrumpfleisten (10) auf.

Im Gegensatz zu Fig. 9, wo die wandschwächenden Kerben (30) an unsichtbaren Stellen des Verbundprofils (1) angeordnet waren, befinden sie sich bei Fig. 11 auf der Sichtseite des Trägerprofils (28). Das Schalungsprofil (31) weist beim Übergang auf das Trägerprofil (28) einen leichten, stufenartigen Absatz (32) auf, so dass die wandschwächenden Kerben (30) etwas unter den Rand des angeschäumten Dämpfelementes (29) zu liegen kommen. Nach dem Wegreissen der Schalung (31) wird die Abreisskante dann vom Dämpfelement (29) überdeckt.

Die Fig. 13 und 14 zeigen ein Verbundprofil, das mit einer offenen Kammer (33) zum Ausgiessen mit einem Chemiewerkstoff auskommt. Als Trägerprofil dienen hierbei zwei Profilschienen (34), die zueinander distanziert und über Wandschwächungen (30) mit dem Schalungsprofil (31) verbunden sind. Die Profilleisten (10) (Schrumpfleisten) sind in gleicher oder ähnlicher Weise wie zuvor beschrieben, gestaltet, wobei sich die Ausbildung nach Fig. 8 besonders empfiehlt. Nach Abtrennen des Schalungsprofiles (31) stehen die Profilschienen (34) nicht mehr in unmittelbarer Verbindung zueinander, sondern werden vom Chemiewerkstoffkörper (29), z.B. Dämpfelement, gehalten.

**Patentansprüche**

1. Verfahren zur Herstellung von Verbundprofilen (1), bestehend aus einem stranggepressten Trägerprofil (2, 28, 34) aus Leichtmetall, insbesondere Aluminium, und aus einem in Form einer Platte gestalteten, sowie an mindestens einer Aussenfläche des Trägerprofils durch Giessen, Schäumen oder dgl. befestigten Chemiewerkstoffkörper (3, 29), der am Trägerprofil befindliche Profilleisten (10) hintergreift, dadurch gekennzeichnet, dass zunächst ein Strangpresshohlprofil bestehend aus mindestens einem Trägerprofil (2, 28, 34) sowie einem daran angeformten Schalungsprofil (13, 14, 15, 31) hergestellt wird, die miteinander einen der Form des zu bildenden Chemiewerkstoffkörpers (3, 29) entsprechenden durchlaufenden Hohlraum (16, 33) bilden, dass danach der Hohlraum (16, 33) mit dem Chemiewerkstoff ausgefüllt, und dass nach dessen Erstarren das den Chemiewerkstoffkörper (3, 29) an seinen späteren Aussenflächen umgreifende Schalungsprofil (13, 14, 15, 31) entlang vorgegebener Wandschwächungen (17, 42) vom Trägerprofil (2, 28, 34) abgetrennt und entfernt wird.

2. Verfahren nach Anspruch 1, dadurch gekennzeichnet, dass von einem Strangpresshohlprofil ausgegangen wird, welches zwei oder mehr Trägerprofile (2) mit dazwischen angeordneten Schalungsprofilen (13, 14, 15) umfasst, die miteinander Hohlräume (16) bilden.

3. Verfahren nach Anspruch 2, dadurch gekennzeichnet, dass von einem Strangpresshohlprofil ausgegangen wird, dessen Hohlräume (16) um einen innenliegenden zentralen Steg (14) des Schalungsprofils (13, 14, 15) gruppiert sind.

4. Verfahren nach Anspruch 1 oder einem der folgenden, dadurch gekennzeichnet, dass vor dem Einfüllen des Chemiewerkstoffes in den Hohlraum (16) ein den Hohlraum (16) begrenzender Wandungsabschnitt (15) längs vorgegebener Wandschwächungen (17) zur Bildung einer Eingiessöffnung abgetrennt und anschliessend der einzelne Hohlraum (16) mit dem Chemiewerkstoff ausgefüllt wird und dass nach dessen Erstarren die übrigen, den Hohlraum begrenzenden Wandungsabschnitte (14, 15) entlang weiterer, vorgegebener Wandschwächungen (17) abgetrennt werden.

5. Verfahren nach Anspruch 1, dadurch gekennzeichnet, dass von einem Strangpressprofil ausgegangen wird, das zwei voneinander distanzierte Trägerprofile (34) und ein Schalungsprofil (31) aufweist, die miteinander einen Hohlraum (33) zur Bildung des Chemiewerkstoffkörpers (29) bilden.

6. Strangpressprofil zur Durchführung des Verfahrens nach Anspruch 1 oder folgenden, dadurch gekennzeichnet, dass es mindestens ein Trägerprofil (2, 28, 34) aus Leichtmetall mit einem für das Anformen des Chemiewerkstoffkörpers (3) erforderlichen Schalungsprofil (13, 14, 15, 31) umfasst, dessen Wandungen am Übergang zum Trägerprofil (2) mit wandschwächenden Kerben (17, 30) versehen sind, und dass an jedem Trägerprofil an der zum Anformen des Chemiewerkstoffkörpers bestimmten Wand mindestens eine erhabene und im Querschnitt hinterschnittene Profilleiste (10) angeordnet ist.

7. Strangpressprofil nach Anspruch 6, dadurch gekennzeichnet, dass bei Anordnung von zwei Trägerprofilen (2) die Schalungsprofile (13, 14, 15) einander zugekehrt und über einen I-förmigen Profilteil (13) miteinander verbunden sind, dessen Steg (14) die beiden Hohlräume (16) voneinander trennt und dessen Flansche (15) die wandschwächenden Kerben (17) aufweisen.

8. Strangpressprofil nach Anspruch 6, dadurch gekennzeichnet, dass bei Anordnung von vier Trägerprofilen (2) die Schalungsprofile (13, 14, 15) paarweise über I-förmige Profilteile (13) verbunden sind und diese Profilteile (13) einen gemeinsamen Flansch (22) aufweisen.

9. Strangpressprofil nach Anspruch 7 oder 8 zur Durchführung des Verfahrens nach Anspruch 4, dadurch gekennzeichnet, dass ein Flansch (15) des I-förmigen Profilteiles (13) einen firstartigen Ansatz (19) in Verlängerung des Steges (14) aufweist, an den eine den zur Bildung der Eingiessöffnung (33) abtrennbaren Flanschbereich (15) überdeckende Haube (20) sich abstützend anbringbar ist.

10. Strangpressprofil nach Anspruch 6, dadurch gekennzeichnet, dass es zwei im Abstand nebeneinander angeordnete Trägerprofile (34) mit einem an beide Trägerprofile (34) angrenzenden und mit ihnen durch vorgegebene Wandschwächungen (30) verbundenen, Schalungsprofil (31) umfasst, wobei der Abstand zwischen den Trägerprofilen (34) als Einfüllöffnung vorgesehen ist.

11. Strangpressprofil nach Anspruch 6 oder einem der folgenden, dadurch gekennzeichnet, dass die Profilleiste (10) eine durchlaufende Nut (11) aufweist, deren Innenflächen (26) einen zum Nutgrund sich erweiternden spitzen Winkel bilden.

## Claims

1. A process for manufacturing compound profiles (1) consisting of an extruded girder section (2, 28, 34) of light metal, in particular aluminium, and a body of chemical material (3, 29), which is formed like a slab and fixed to at least one exterior surface of the girder section by casting, foaming or the like, and which engages behind profile cleats (10) situated on the girder profile, characterised in that first of all an extrusion hollow profile, which consists of at least one girder profile (2, 28, 34) and an integrally formed casing profile (13, 14, 15, 31) are manufactured, which together form a cavity (16, 33) corresponding to and passing through the shape of the body of chemical material (3, 29) which is to be formed, the cavity (16, 33) is then filled with the chemical material, and when the latter has set, the casing profile (13, 14, 15, 31) which embraces the body of chemical material (3, 29) by its subsequent exterior surfaces is separated and removed along chamfers (17, 42) in the wall of the girder profile (2, 28, 34).

2. A process according to claim 1, characterised in that it starts with an extrusion hollow profile comprising two or more girder profiles (2) with casing profiles (13, 14, 15) disposed in between them, which together form cavities (16).

3. A process according to claim 2, characterised in that it starts with an extrusion hollow profile, the cavities (16) of which are grouped around an enclosed central web (14) of the casing profile (13, 14, 15).

4. A process according to claim 1 or one of the following, characterised in that, before the cavity (16) is filled with the chemical material, a wall section (15) limiting the cavity (16) is separated along specified wall chamfers (17) to form a pouring-in aperture, and the individual cavity (16) is subsequently filled with the chemical material, and in that after the latter has set, the remaining wall sections (14, 15) which limit the cavity are removed along further specified wall chamfers (17).

5. A process according to claim 1, characterised in that it starts with an extrusion profile which has two girder sections (34) distanced from one another and a casing profile (31) which together form a cavity (33) for forming the body of chemical material (29).

6. An extrusion profile for carrying out the process according to claim 1 or the following, characterised in that it comprises at least one girder profile (2, 28, 34) of light metal with a casing profile (13, 14, 15, 31) which is necessary for integrally moulding the body of chemical material (3), and the walls of which are provided with notches (17, 30) acting as chamfers and in that on each girder profile at least one projecting profile cleat (10) which is undercut in section is disposed on the wall designated for integrally moulding the chemical material body.

7. An extrusion profile according to claim 6, characterised in that in the arrangement of two girder profiles (2) the casing profiles (13, 14, 15) face one another and are connected together via an I-shaped profile section (13) the web of which (14) separates the two cavities (16) from one another and the flanges (15) of which have notches (17) acting as chamfers.

8. An extrusion profile according to claim 6, characterised in that, in the arrangement of four girder profiles (2), the casing profiles (13, 14, 15) are connected in pairs via I-shaped profile sections (13) and these profile sections (13) have a common flange (22).

9. An extrusion profile according to claim 7 or 8 for carrying out the process according to claim 4, characterised in that a flange (15) of the I-shaped profile section (13) has a ridge-like projection (19) as an extension of the web (14), the projection acting as a support for a covering hood (20) which can be mounted on the projection and which covers the flange region (15) which is separable for the formation of the pouring-in aperture (33).

10. An extrusion profile according to claim 6, characterised in that it comprises two girder profiles (34) disposed next to one another with clearance with a casing profile (31) which butt against both girder profiles (34) and are joined to them by specified wall chamfers (30), the clearance between the girder profiles (34) is provided as a filling aperture.

11. An extrusion profile according to claim 6 or one of the following, characterised in that the profile cleat (10) has a continuous groove (11), the inner surfaces (26) of which form an acute angle which widens towards the base of the groove.

**Revendications**

1. Procédé de fabrication de profilés composites (1), constitués d'une poutrelle profilée (2, 28, 34) extrudée, en métal léger, notamment en aluminium, et d'un corps (3, 29) en matière chimique, en forme de plaque, fixé à l'une au moins des faces extérieures de la poutre profilée par coulée, par moussage ou par un procédé analogue et qui s'accroche derrière des baguettes profilées (10) se trouvant sur la poutrelle profilée, caractérisé en ce qu'il consiste à fabriquer d'abord un profilé tubulaire extrudé constitué d'au moins une poutrelle profilée (2, 28, 34) ainsi que d'un profilé de coffrage (13, 14, 15, 31) qui y est appliqué par moulage, qui forment l'un avec l'autre une cavité (16, 33) continue correspondant à la forme du corps (3, 29) en matière chimique à former, à emplir ensuite la cavité (16, 33) de la matière chimique et, après sa solidification, à séparer, le long d'affaiblissements de paroi (17, 42) prévus à l'avance de la poutrelle profilée (2, 28, 34) le profilé de coffrage, (13, 14, 15, 31) entourant les surfaces ultérieures extérieures, du corps en matière chimique.

2. Procédé suivant la revendication 1, caractérisé en ce qu'il consiste à partir d'un profilé tubulaire extrudé, qui comprend deux ou plusieurs poutrelles profilées (2) ayant des profilés de coffrage (13, 14, 15) disposés entre elles et formant les uns avec les autres des cavités (16).

3. Procédé suivant la revendication 2, caractérisé en ce qu'il consiste à partir d'un profilé tubulaire extrudé, dont les cavités (16) sont groupées autour d'une âme (14) centrale disposée à l'intérieur du profilé de coffrage (13, 14, 15).

4. Procédé suivant la revendication 1 ou l'une des suivantes, caractérisé en ce qu'il consiste à séparer, avant d'emplir la cavité (16) de la matière chimique, un tronçon de paroi (15) délimitant la cavité (16) le long d'affaiblissements de paroi (17) prévues à l'avance, pour former une ouverture de coulée et ensuite à remplir la cavité (16) de la matière chimique et à séparer, après sa solidification, les autres tronçons de paroi (14, 15) délimitant la cavité le long d'autres affaiblissements de paroi (17) prévus à l'avance.

5. Procédé suivant la revendication 1, caractérisé en ce qu'il consiste à partir d'un profilé extrudé qui comporte deux poutrelles profilées (34) maintenues à distance l'une de l'autre et un profilé de coffrage (31) qui forment entre eux une cavité (33) pour la formation du corps (29) en matière chimique.

6. Profilé extrudé pour la mise en œuvre du procédé suivant la revendication 1 ou les suivantes, caractérisé en ce qu'il comprend au moins une poutrelle profilée (2, 28, 34) en métal léger, avec un profilé de coffrage (13, 14, 15, 31) qui est nécessaire au moulage du corps en matière chimique et dont les parois sont munies d'entailles (17, 30) d'affaiblissement de la paroi à la transition vers la poutrelle profilée (2) et en ce que sur la paroi destinée au moulage du corps en matière chimique de chaque poutrelle profilée est disposée au moins une baguette profilée (10) en saillie et à section transversale à contre-dépouille.

7. Profilé extrudé suivant la revendication 6, caractérisé en ce que, dans le cas où l'on dispose deux poutres profilées (2), les profilés de coffrage (13, 14, 15) sont tournés l'un vers l'autre et sont reliés l'un à l'autre par une partie profilée (13) en forme de I, dont l'âme (14) sépare les deux cavités (16) l'une de l'autre, et dont les branches (15) comportent des entailles (17) d'affaiblissement de la paroi.

8. Profilé extrudé suivant la revendication 6, caractérisé en ce que, dans le cas où l'on dispose quatre poutrelles profilées (2), les profilés de coffrage (13, 14, 15) sont reliés par couple, par l'intermédiaire de parties profilées (13) en forme de I, et ces parties profilées (13) comportent une branche (22) commune.

9. Profilé extrudé suivant la revendication 7 ou 8, pour la mise en œuvre du procédé suivant la revendication 4, caractérisé en ce qu'une branche (15) de la partie profilée (13) en forme de I comporte une partie saillante (19) d'un premier type, qui est dans le prolongement de l'âme (14) et sur laquelle peut être montée, en s'y appuyant, une hotte (20) recouvrant la région de la branche (15) et qui peut être séparée pour la formation de l'ouverture de coulée (33).

10. Profilé extrudé suivant la revendication 6, caractérisé en ce qu'il comprend deux poutrelles profilées (34) disposées à distance l'une à côté de l'autre, avec un profilé de coffrage (31) adjacent aux deux poutrelles profilées (34) et relié à elles par des affaiblissements de paroi (30) prévus à l'avance, l'intervalle entre les poutrelles profilées (34) étant prévu comme ouverture de remplissage.

11. Profilé extrudé suivant la revendication 6 ou l'une des suivantes, caractérisé en ce que la baguette profilée (10) comporte une gorge continue (11) dont les surfaces intérieures (26) font un angle aigu qui s'élargit vers le fond de la gorge.

FIG. 1

FIG. 2

FIG 3

FIG 4

FIG 5

FIG 6

FIG 7

11

_Fig 8_

_Fig 13_

_Fig 14_

## Fig 9

## Fig 11

## Fig 10

## Fig 12